# EUROPÄISCHE PATENTANMELDUNG

(11) **EP 2 325 110 A1**
(43) Veröffentlichungstag der Anmeldung: **25.05.2011**
(21) Anmeldenummer: 09176365.6
(22) Anmeldetag: 18.11.2009
(51) Int. Cl.: B65G 1/02

(54) **Lagersystem zur Lagerung von Gütern auf Einweg-Ladehilfsmitteln und Facheinsatz für ein derartiges Lagersystem**

(71) Anmelder: Inter IKEA Systems B.V., 2616 LN Delft (NL)
(72) Erfinder: Lucas, Dr.-Ing. Martin, 48151, Münster (DE)
(74) Vertreter: Schurack, Eduard F.

(57) **Zusammenfassung**

Die vorliegende Erfindung betrifft ein Lagersystem zur Lagerung von Gütern (24) auf Einweg-Ladehilfsmitteln (20) umfassend: mindestens zwei Regalrahmen (10), die aus mindestens zwei Vertikalstützen (12) und Fachwerkverstrebungen (14) gebildet sind, wobei die mindestens zwei Regalrahmen (10) über mindestens zwei Längstraversen (28a, 28b) miteinander verbunden sind; und mindestens einen Facheinsatz (16), der auf den mindestens zwei Längstraversen (28a, 28b) gelagert ist; wobei der Facheinsatz (16) umfasst: mindestens einen ersten (26a) und einen zweiten Quersteg (26b), die parallel zu den Längstraversen (28a, 28b) orientiert sind, wobei der Abstand zwischen dem ersten (26a) und dem zweiten Quersteg (26b) so bemessen ist, dass die Querstege (26a, 26b) gegenüber den Längstraversen (28a, 28b) nicht aufbauend angeordnet sind; mindestens zwei Tiefenstege (18a, 18b), durch die der erste (26a) und der zweite Quersteg (26b) miteinander verbunden sind, wobei die Länge der Tiefenstege (18a, 18b) größer als der Abstand der mindestens zwei Längstraversen (28a, 28b) voneinander ist; wobei das Lagersystem weiterhin mindestens eine Befestigungsvorrichtung (30) zum Befestigen des Facheinsatzes an den Längstraversen (28a, 28b) umfasst. Sie betrifft überdies einen entsprechenden Facheinsatz für ein derartiges Lagersystem.

## Beschreibung

Die vorliegende Erfindung betrifft ein Lagersystem zur Lagerung von Gütern auf Einweg-Ladehilfsmitteln umfassend mindestens zwei Regalrahmen, die aus mindestens zwei Vertikalstützen und Fachwerkverstrebungen gebildet sind, wobei die mindestens zwei Regalrahmen über mindestens zwei Längstraversen miteinander verbunden sind, und mindestens einen Facheinsatz, der auf den mindestens zwei Längstraversen gelagert ist. Sie betrifft überdies einen Facheinsatz für ein derartiges Lagersystem.

Gattungsgemäße Lagersysteme sind bekannt. Dabei werden die auf Einweg-Ladehilfsmitteln positionierten Güter auf einer Holzpalette, beispielsweise einer Europalette, angeordnet, wobei die Holzpalette anschließend derart in das Lagersystem eingebracht wird, dass sie sich mit ihrer Unterseite auf mindestens zwei Längstraversen abstützt. Daraus ergeben sich mehrere Nachteile: Holzpaletten stellen einen beträchtlichen Kostenfaktor dar, so dass diese üblicherweise zu ihrem Inhaber zurücktransportiert werden. Dies ist mit unerwünschten Transportkosten sowie Materialverschleiß verbunden. Die in diesem Zusammenhang eingeführten tauschfähigen Holzpaletten erfordern einen kostenträchtigen zusätzlichen logistischen Aufwand. Ein Einlagern der Güter ohne Verwendung von Holzpaletten, das heißt die Güter sind lediglich auf den Einweg-Ladehilfsmitteln angeordnet, kommt bei gängigen Lagersystemen nicht in Betracht, da die Stabilität von üblichen Einwegpaletten dafür nicht ausreicht. Aufgrund der dann fehlenden Holzpalette würden die Einwegpaletten knicken oder brechen, so dass die Güter zwischen den Längstraversen durchfallen würden. Die Ursache hierfür liegt darin, dass Einwegpaletten üblicherweise aus Plastik oder Pappe gefertigt sind, die jeweils nach ihrer Benutzung geschreddert und einem Recyclingprozess zugeführt werden. Herkömmliche Einwegpaletten weisen eine durchgehende Fläche auf, auf deren Oberseite das zu ladende Gut anzuordnen ist und auf deren Unterseite eine Vielzahl von regelmäßig beabstandeten Füßen ausgebildet ist.

Werden in dem bekannten Lagersystem lediglich Böden eingezogen, so löst dies das Problem nicht, da die Höhe der Füße von Einwegpaletten lediglich einen Gabelfreiraum von ca. 45 mm bereitstellen, während der Gabelfreiraum bekannter Holzpaletten ― wofür die üblichen Gabelstapler ausgelegt sind ― einen Gabelfreiraum von 90 bis 100 mm aufweisen. Dieser große Gabelfreiraum ist ― auch bei Einsatz von Gabelstaplern mit geringerem Gabelfreiraum ― insbesondere bei Lagerung des Guts in größeren Höhen wünschenswert, um das Risiko von unkalkulierbarem Lasteintrag durch Gabelberührung zu minimieren. Aufgrund der Masse eines Gabelstaplers, die bei bis zu 3,5 Tonnen liegen kann, kann dieser Lasteintrag sehr groß ausfallen.

Aus dem Stand der Technik sind eine Vielzahl von Lagersystemen bekannt, die jedoch zum Teil keine Lösung für Einweg-Ladehilfsmittel bereitstellen, zum anderen mit zu großem Realisierungsaufwand verbunden sind. In diesem Zusammenhang wird verwiesen auf die DD 20 32 92 A1, die DE 36 44 692 A1, die DE 25 55 892 A1, die DE 30 03 207 A1, die DE 81 06 383 U1, die DE 88 13 548 U1, die US 5,628,415 A, die US 5,845,795 A sowie die DE 10 108 944 A1.

Die Aufgabe der vorliegenden Erfindung besteht deshalb darin, ein gattungsgemäßes Lagersystem derart weiterzubilden, dass auf kostengünstige Art und Weise die Lagerung von Gütern auf Einweg-Ladehilfsmitteln ohne Verwendung bekannter Holzpaletten bei Einsatz gängiger Gabelstapler ermöglicht wird. Die Aufgabe besteht weiterhin darin, einen entsprechenden Facheinsatz für ein derartiges Lagersystem bereitzustellen.

Diese Aufgaben werden gelöst durch ein Lagersystem mit den Merkmalen von Patentanspruch 1 sowie durch einen Facheinsatz mit den Merkmalen von Patentanspruch 15. Der vorliegenden Erfindung liegt die Erkenntnis zugrunde, dass diese Aufgaben gelöst werden können, wenn ein Facheinsatz mindestens einen ersten und einen zweiten Quersteg umfasst, die parallel zu den Längstraversen orientiert sind, wobei der Abstand zwischen dem ersten und dem zweiten Quersteg so bemessen ist, dass die Querstege gegenüber den Längstraversen nicht aufbauend angeordnet sind, das heißt, dass die Querstege innerhalb oder außerhalb der Längstraversen parallel zu diesen verlaufen. Ein derartiger Facheinsatz umfasst weiterhin mindestens zwei Tiefenstege, durch die der erste und der zweite Quersteg miteinander verbunden sind, wobei die Länge der Tiefenstege größer als der Abstand der mindestens zwei Längstraversen voneinander ist. Dadurch kann ein derartiger Quersteg seiner Stützfunktion für Einweg-Ladehilfsmittel gerecht werden. Ein erfindungsgemäßes Lagersystem umfasst weiterhin mindestens eine Befestigungsvorrichtung zum Befestigen des Facheinsatzes an den Längstraversen.

Durch die vorliegende Erfindung wird die Möglichkeit bereitgestellt, die Tiefenstege auf die Füße der Einweg-Ladehilfsmittel anzupassen. Ohne Verwendung einer Holzpalette kann daher die Gewichtskraft des auf dem Einweg-Ladehilfsmittel angeordneten Guts über die Tiefenstege auf die Längstraversen des Lagersystems übertragen werden. Es besteht daher keine Gefahr des Durchknickens oder Abbrechens des Bodens des Einweg-Ladehilfsmittels. Durch die Stützfunktion der Tiefenstege wird bei einem erfindungsgemäßen Lagersystem daher die Lagerung von Gütern mit nicht-tragender Unterkonstruktion ermöglicht. Dadurch, dass die Querstege gegenüber den Längstraversen nicht aufbauend angeordnet sind, kann ein großer Gabelfreiraum bereitgestellt werden, der sich aus der Höhe der Füße des Einweg-Ladehilfsmittels und der Höhe eines Tiefenstegs ergibt. Dabei ist zu berücksichtigen, dass ein Tiefensteg eine Höhe von mindestens 50 mm aufweisen kann. Während eine Lastaufnahme und ―abgabe auf Bodenniveau mit dem Gabelfreiraum eines typischen Einweg-Ladehilfsmittels von beispielsweise 45 mm ohne Weiteres möglich ist (bei einer Höhe der Gabeln eines Gabelstaplers von ca. 40 mm), wird durch die vorliegende Erfindung ein ausreichend großer Gabelfreiraum auch in großer Höhe bereitgestellt. Dadurch ist das Risiko einer Gabelberührung minimiert. Die Folgen eines unerwünschten Lasteintrags durch den Gabelstapler können weitgehend ausgeschlossen werden.

Die vorliegende Erfindung ermöglicht daher die Lagerung von Gütern auf Einweg-Ladehilfsmitteln wie Papp- oder Plastikpaletten unter Bereitstellung zusätzlichen Gabelfreiraums auf besonders kostengünstige Art und Weise. Auch Standardpaletten und Tablaren können in einem erfindungsgemäßen Lagersystem gelagert werden. Ein erfindungsgemäßer Facheinsatz kann in einem Standardpalettenregal, das bisher mit Standard-Holzpaletten ausgerüstet war, nachgerüstet werden.

Bei einer bevorzugten Ausführungsform ist die Anzahl der Tiefenstege mit der Anzahl der Stützvorrichtungen eines Einweg-Ladehilfsmittels korreliert. Insbesondere ist die Anzahl der Tiefenstege so bemessen, dass jeweils an allen Stützvorrichtungen eines Einweg-Ladehilfsmittels, die in Querrichtung des Lagersystems hintereinander anzuordnen sind, ein Tiefensteg angeordnet ist. Wenn demnach das Einweg-Ladehilfsmittel drei mal drei Stützfüße umfasst, so sind mindestens drei Tiefenstege so anzuordnen, dass auf jeden Tiefensteg drei Stützfüße zu stehen kommen.

Der jeweils zugeordnete Tiefensteg kann einteilig ausgebildet sein. Es kann jedoch auch vorgesehen sein, dass der zugeordnete Tiefensteg mehrteilig ausgebildet ist und jeweils mindestens zwei parallel verlaufende Teiltiefenstege umfasst. Dabei können die Teiltiefenstege voneinander beabstandet sein, bevorzugt um mindestens 10 mm. Dadurch ergibt sich der Vorteil, dass trotz Bereitstellung eines Tiefenstegs mit hoher Tragkraft Sprinkleranlagen in Hallen, in denen ein erfindungsgemäßes Lagersystem aufgebaut ist, vorschriftsmäßig funktionieren. Erst durch die Aufteilung eines Tiefenstegs in mehrere Teiltiefenstege ist sichergestellt, dass ausreichend Löschwasser auch in den Bereich vordringen kann, der unter einem Tiefensteg angeordnet ist.

Bevorzugt ist der Abstand der Tiefenstege voneinander mit der Position der Stützvorrichtungen eines Einweg-Ladehilfsmittels korreliert. Dadurch wird sichergestellt, dass die Stützwirkung jeder Stützvorrichtung über die Tiefenstege auf die Längstraversen übertragen und damit eine Beschädigung des Einweg-Ladehilfsmittels und des darauf angeordneten Guts zuverlässig verhindert werden kann.

Bevorzugt sind die Querstege und die Tiefenstege eines Facheinsatzes lösbar, insbesondere mittels Schrauben, miteinander verbunden. Dadurch können einzelne Querstege und Tiefenstege bei Beschädigung ausgewechselt werden, so dass im Falle einer Beschädigung eines Querstegs oder eines Tiefenstegs nicht der gesamte Facheinsatz entsorgt werden muss.

Die Befestigungsvorrichtung zum Befestigen des Facheinsatzes an den Längstraversen kann mindestens ein Befestigungsband und/oder Schrauben umfassen. Dabei stellt die Verwendung eines Befestigungsbands eine Möglichkeit bereit, einen Lagereinsatz besonders schnell zu befestigen und wieder zu lösen. Letzteres kann nötig sein, wenn das betreffende Lagersystem beispielsweise auf Einweg-Ladehilfsmittel mit einer anderen Anzahl oder Position der Stützvorrichtungen umgerüstet werden soll.

Die Querstege und/oder die Tiefenstege sind bevorzugt aus Metall, aus Holz oder aus Composite Material gefertigt. Die Verwendung von Holz stellt den Vorteil bereit, dass aufgrund der Rauheit der Oberfläche ein Verrutschen der Einweg-Ladehilfsmittel zuverlässig vermieden werden kann. Besonders bevorzugt wird getrocknetes Fichtenholz oder vergleichbares Holz verwendet, um ein Verziehen beispielsweise unter Feuchtigkeitseinfluss, zu verhindern. Bei Verwendung von Querstegen und/oder Tiefenstegen aus Metall werden diese bevorzugt mit einer Antirutschbeschichtung versehen. Um den bereits oben erwähnten Aspekt des Durchleitens von Löschwasser zu verstärken, können in den Metallstegen überdies an deren Ober- und Unterseite Öffnungen vorgesehen sein.

Anstelle der Befestigung eines Facheinsatzes in den Längstraversen mittels Befestigungsband und/oder Schrauben kann auch der Abstand der Querstege so an die Längstraversen angepasst sein, dass der Facheinsatz durch Klemmen an den Längstraversen befestigt ist. Dies kann beispielsweise durch eine entsprechende Profilierung, insbesondere Abschrägung, der Querstege erreicht werden und stellt eine besonders ressourcenschonende Möglichkeit der Befestigung des Facheinsatzes an den Längstraversen bereits.

Gemäß einer besonders bevorzugten Weiterbildung sind die Tiefenstege zumindest an einem Ende abgeschrägt. Dies stellt eine ausgezeichnete Führungshilfe dar, die insbesondere das Hantieren in großer Höhe und bei schlechter Sicht erleichtert. Die Gefahr einer Beschädigung des Ladeguts oder der Gefährdung einer Bedienperson ist dadurch deutlich minimiert.

Bei einer weiteren bevorzugten Ausführungsform ist der Abstand der Querstege derart bemessen, dass zumindest zwei Querstege eines Facheinsatzes nicht weiter als 5 mm von den zugeordneten Längstraversen beabstandet sind, diese insbesondere berühren. Dadurch ergibt sich ein Lagersystem, das einerseits ohne große Probleme zusammengebaut werden kann, andererseits nahezu kein Spiel aufweist.

Bei einer bevorzugten Weiterbildung umfasst der Facheinsatz mindestens einen ersten, einen zweiten und einen dritten Quersteg, denen mindestens eine erste, eine zweite und eine dritte Längstraverse des Lagersystems zugeordnet sind, wobei der zweite Quersteg im Wesentlichen mittig zwischen dem ersten und dem dritten Quersteg angeordnet ist. Diese Ausführungsform bietet den Vorteil, dass die vorliegende Erfindung auch bei der Lagerung besonders langer Ladegüter auf Einweg-Ladehilfsmitteln eingesetzt werden kann. Alternativ können dadurch auf Platz sparendste Art und Weise zwei Einweg-Ladehilfsmittel herkömmlicher Größe hintereinander angeordnet werden. Dies resultiert in einer besonders effektiven Nutzung des vorhandenen Raums.

Weitere bevorzugte Ausführungsformen ergeben sich aus den Unteransprüchen.

Die mit Bezug auf das erfindungsgemäße Lagersystem beschriebenen bevorzugten Ausführungsformen und deren Vorteile gelten, soweit anwendbar, entsprechend für einen erfindungsgemäßen Facheinsatz.

Im Nachfolgenden werden nunmehr Ausführungsbeispiele der vorliegenden Erfindung unter Bezugnahme auf die beigefügten Zeichnungen näher beschrieben. Diese zeigen:
- Fig. 1: einen Ausschnitt eines erfindungsgemäßen Lagersystems mit einem erfindungsgemäßen Facheinsatz, auf dem ein auf einem Einweg- Ladehilfsmittel angeordnetes Gut gelagert ist;
- Fig. 2: eine perspektivische Ansicht eines Ausführungsbeispiels eines er- findungsgemäßen Facheinsatzes;
- Fig. 3: eine Ansicht von unten auf einen in einem erfindungsgemäßen La- gersystem befestigten erfindungsgemäßen Facheinsatz;
- Fig. 4: eine Draufsicht auf einen in einem erfindungsgemäßen Lagersystem befestigten erfindungsgemäßen Facheinsatz;
- Fig. 5: eine Ansicht von unten auf einen in einem erfindungsgemäßen La- gersystem befestigten erfindungsgemäßen Facheinsatz;
- Fig. 6: eine Detailansicht eines Tiefenstegs eines in einem erfindungsge- mäßen Lagersystem befestigten erfindungsgemäßen Facheinsat- zes;
- Fig. 7a bis 7d: Vorderansichten beziehungsweise Seitenansichten verschiedener Ausführungsbeispiele von erfindungsgemäßen aus Holz gefertigten Facheinsätzen;
- Fig. 8: eine Draufsicht auf einen in einem erfindungsgemäßen Lagersystem befestigten erfindungsgemäßen Facheinsatz;
- Fig. 9: eine Ansicht von unten auf einen in einem erfindungsgemäßen La- gersystem befestigten erfindungsgemäßen Facheinsatz; und
- Fig. 10a bis 10d: Vorderansichten beziehungsweise Seitenansichten verschiedener Ausführungsbeispiele von erfindungsgemäßen aus Metall gefertig- ten Facheinsätzen.

Im Nachfolgenden werden Ausführungsbeispiele eines erfindungsgemäßen Lagersystems und erfindungsgemäßer Facheinsätze näher beschrieben. Dabei werden für gleiche und gleich wirkende Bauelemente dieselben Bezugszeichen verwendet, die jedoch nur einmal eingeführt werden.

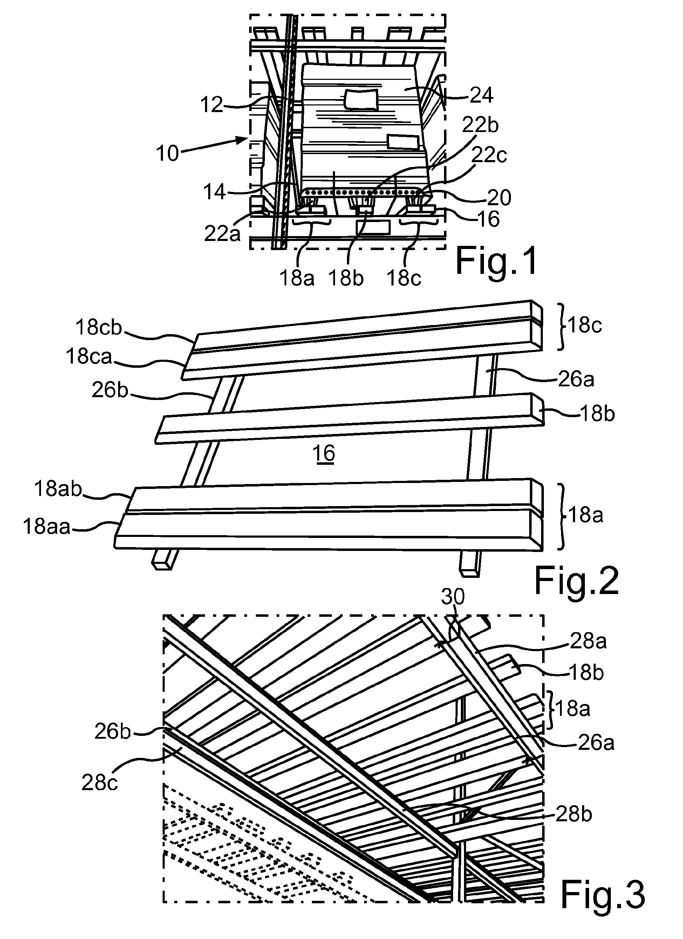

Fig. 1 zeigt einen Ausschnitt eines erfindungsgemäßen Lagersystems mit einem Regalrahmen 10, der zwei Vertikalstützen 12 sowie Fachwerkverstrebungen 14 umfasst. Weitere Regelrahmen sind parallel zum Regalrahmen 10 rechts und links des Regalrahmens 10 angeordnet, jedoch in der Darstellung von Fig. 1 nicht erkennbar. Auf einem Facheinsatz 16, von dem die Tiefenstege 18a bis 18c erkennbar sind, ist eine Einwegpalette 20 angeordnet, wobei die erste Reihe von Stützfüßen 22a bis 22c zu erkennen ist. Auf der Einwegpalette 20 ist ein Ladegut 24 angeordnet. Nicht erkennbar ist eine zweite Reihe von Stützfüßen 22d bis 22f sowie eine dritte Reihe von Stützfüßen 22g bis 22i, wobei die Stützfüße 22d und 22g in der Zeichenebene hinter dem Stützfuß 22a, die Stützfüße 22e und 22h hinter dem Stützfuß 22b und die Stützfüße 22f und 22i hinter dem Stützfuß 22c angeordnet sind.

Fig. 2 zeigt ein Ausführungsbeispiel eines erfindungsgemäßen Facheinsatzes 16. Dabei bilden die Teiltiefenstege 18aa und 18ab zusammen den Tiefensteg 18a, genauso wie die Teiltiefenstege 18ca und 18cb den Tiefensteg 18c bilden. Die Tiefenstege 18a bis 18c sind mittels Schrauben auf Querstegen 26a und 26b befestigt.

Fig. 3 zeigt eine Ansicht von unten auf mehrere erfindungsgemäße Facheinsätze 16, der in einem erfindungsgemäßen Lagersystem angeordnet ist. Deutlich zu erkennen sind drei Längstraversen 28a bis 28c des Lagersystems. Ein Facheinsatz 16 ist über seinen Quersteg 26a mittels eines Befestigungsbands 30 an der Längstraverse 28a befestigt.

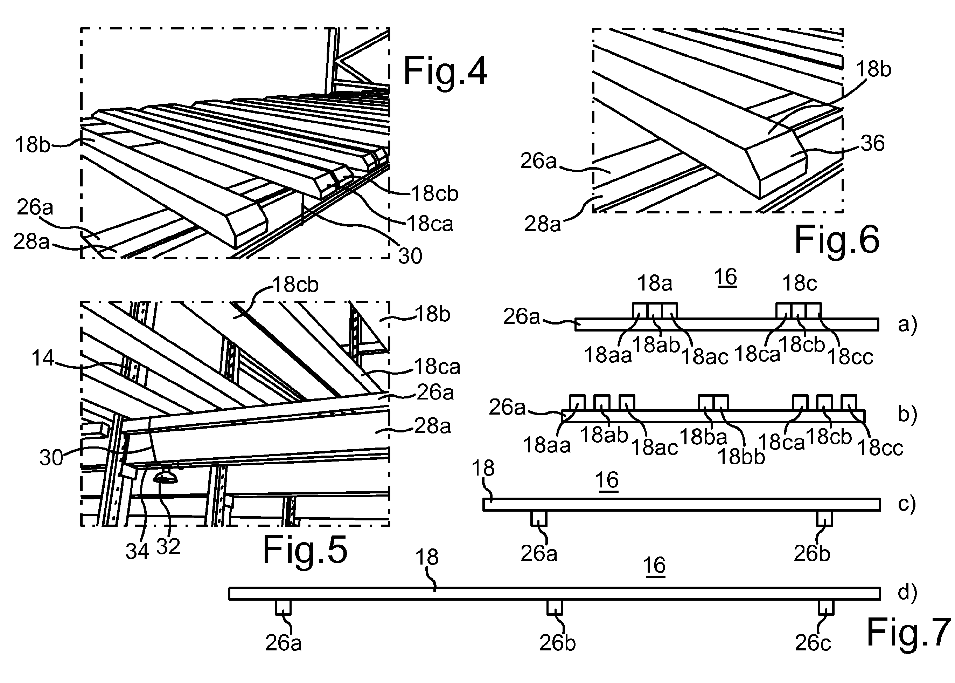

Aus der Darstellung von Fig. 4 geht hervor, dass der Quersteg 26a die Längstraverse 28a an der Innenseite berührt. Die Oberseite des Querstegs 26a schließt mit der Oberseite der Längstraverse 28a ab.

Fig. 5 zeigt die Konstellation von Fig. 4 von unten; hier ist überdies ein Sprinklerkopf 32 einer Sprinkleranlage, von der die Leitung 34 zu sehen ist, erkennbar.

Fig. 6 zeigt eine Detailansicht eines Tiefenstegs 18b, aus dem hervorgeht, dass sein Ende 36 abgeschrägt ist, bevorzugt in einem Winkel von 45°..

Die Fig. 7 zeigt unterschiedliche Ausführungsbeispiele aus Holz gefertigter erfindungsgemäßer Facheinsätze 16. Fig. 7a zeigt eine Frontansicht auf ein erstes Ausführungsbeispiel. Der Quersteg ist aus einem Kantholz mit einer Höhe von 40 mm und einer Breite von 50 mm gefertigt. Die Tiefenstege 18a und 18c umfassen jeweils drei Teiltiefenstege 18aa bis 18cc, wobei ein Teiltiefensteg 18aa bis 18cc aus einem Kantholz mit einer Kantenlänge von 50 mm gefertigt ist. Der Abstand zwischen dem Tiefensteg 18a und dem Tiefensteg 18c beträgt 300 mm. Die Gesamtlänge des Querstegs 26a beträgt 950 mm.

In dem Ausführungsbeispiel von Fig. 7b sind die Tiefenstege 18a und 18c aus drei Teiltiefenstegen 18aa bis 18cc, und der Tiefensteg 18b aus zwei Teiltiefenstegen 18ba, 18bb gefertigt. Der Quersteg 26a und die Teiltiefenstege können dieselben Maße aufweisen wie in Zusammenhang mit Fig. 7a ausgeführt. Der Abstand zwischen den Teiltiefenstegen innerhalb des Tiefenstegs 18a und 18c betragen 16,67 mm.

Die Figuren 7c und 7d zeigen Seitenansichten auf Ausführungsbeispiele eines erfindungsgemäßen Facheinsatzes 16. Während der in Fig. 7c dargestellte Facheinsatz eine Länge von 1300 mm aufweist und nur zwei Querstege 26a, 26b umfasst, weist der in Fig. 7d dargestellte Facheinsatz eine Länge von 2100 mm auf und verfügt über drei Querstege 26a, 26b, 26c, wobei der Quersteg 26b etwa mittig zwischen den Querstegen 26a und 26c angeordnet ist.

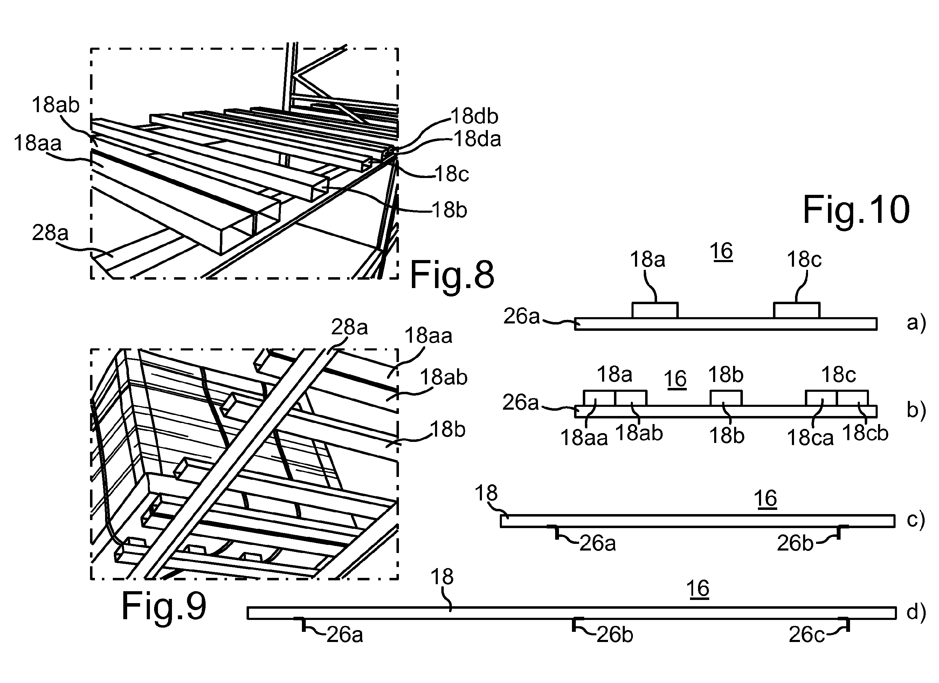

Die Figuren 8 bis 10 zeigen Ausführungsbeispiele der vorliegenden Erfindung, wobei der Facheinsatz 16 aus Metallprofilen gefertigt ist. Wie aus Fig. 8, die eine Draufsicht, und Fig. 9, die eine Ansicht von unten zeigt, zu erkennen ist, werden für die Tiefenstege 18 rechteckförmige Hohlprofile, für die Querstege 26 L-förmige Metallprofile verwendet. Wie für den Fachmann offensichtlich, könnten auf für die Querstege 26 rechteckförmige Hohlprofile verwendet werden.

In Fig. 10a ist eine Seitenansicht eines ersten Ausführungsbeispiels eines aus Metallprofilen gefertigten erfindungsgemäßen Facheinsatzes 16 dargestellt, der zwei Tiefenstege 18a, 18c umfasst, die auf einem Quersteg 26a montiert sind. Die Länge des Querstegs 26a beträgt bevorzugt wieder 950 mm, die Breite eine Tiefenstegs 18 150 mm. Der Abstand zwischen den Tiefenstegen 18a, 18c beträgt bevorzugt 300 mm. Ein Tiefensteg 18 weist eine Höhe von 50 mm und eine Breite von 150 mm auf. Bei dem in Fig. 10b dargestellten Facheinsatz 16 beträgt die Länge wiederum 950 mm, der Tiefensteg 18a umfasst zwei Teiltiefenstege 18aa, 18ab, von denen jeder eine Höhe von 50 mm und eine Breite von 100 mm aufweist. Der Abstand zwischen den Tiefenstegen 18a und 18b einerseits und 18b und 18c andererseits beträgt 200 mm. Die Tiefenstege 18 sind mittels Schrauben an den Querstegen 26 befestigt.

Die Figuren 10c und 10d zeigen Seitenansichten von zwei Ausführungsbeispielen aus Metall gefertigter erfindungsgemäßer Facheinsätze 16. Der in Fig. 10c dargestellte Facheinsatz 16 weist eine Länge von 1250 mm auf, wobei deutlich zu erkennen ist, dass die Querstege 26a, 26b aus L-förmigen Metallprofilen gefertigt sind. Der in Fig. 10d dargestellte Facheinsatz weist drei Querstege 26a, 26b, 26c auf, die ebenfalls aus L-förmigen Profilen gefertigt sind, wobei der Quersteg 26b etwa mittig zwischen den Querstegen 26a und 26c angeordnet ist.

## Patentansprüche

1. Lagersystem zur Lagerung von Gütern (24) auf Einweg-Ladehilfsmitteln (20) umfassend:
- mindestens zwei Regalrahmen (10), die aus mindestens zwei Vertikalstützen (12) und Fachwerkverstrebungen (14) gebildet sind, wobei die mindestens zwei Regalrahmen (10) über mindestens zwei Längstraversen (28a, 28b) miteinander verbunden sind; und
- mindestens einen Facheinsatz (16), der auf den mindestens zwei Längstraversen (28a, 28b) gelagert ist;
**dadurch gekennzeichnet,**
**dass** der Facheinsatz (16) umfasst:
- mindestens einen ersten (26a) und einen zweiten Quersteg (26b), die parallel zu den Längstraversen (28a, 28b) orientiert sind, wobei der Abstand zwischen dem ersten (26a) und dem zweiten Quersteg (26b) so bemessen ist, dass die Querstege (26a, 26b) gegenüber den Längstraversen (28a, 28b) nicht aufbauend angeordnet sind;
- mindestens zwei Tiefenstege (18a, 18b), durch die der erste (26a) und der zweite Quersteg (26b) miteinander verbunden sind, wobei die Länge der Tiefenstege (18a, 18b) größer als der Abstand der mindestens zwei Längstraversen (28a, 28b) voneinander ist;
wobei das Lagersystem weiterhin mindestens eine Befestigungsvorrichtung (30) zum Befestigen des Facheinsatzes an den Längstraversen (28a, 28b) umfasst.

2. Lagersystem nach Anspruch 1,
**dadurch gekennzeichnet,**
**dass** die Anzahl der Tiefenstege (18) mit der Anzahl der Stützvorrichtungen (22a bis 22c) eines Einweg-Ladehilfsmittels (20) korreliert ist.

3. Lagersystem nach Anspruch 2,
**dadurch gekennzeichnet,**
**dass** die Anzahl der Tiefenstege (18) so bemessen ist, dass jeweils allen Stützvorrichtungen (22a bis 22c) eines Einweg-Ladehilfsmittels (20), die in Querrichtung des Lagersystems hintereinander anzuordnen sind, ein Tiefensteg (18) zugeordnet ist.

4. Lagersystem nach Anspruch 3,
**dadurch gekennzeichnet,**
**dass** der zugeordnete Tiefensteg (18) einteilig ausgebildet ist.

5. Lagersystem nach Anspruch 3,
**dadurch gekennzeichnet,**
**dass** der zugeordnete Tiefensteg (18) mehrteilig ausgebildet ist und jeweils mindestens zwei parallel verlaufende Teiltiefenstege 18aa bis 18cc) umfasst.

6. Lagersystem nach Anspruch 5,
**dadurch gekennzeichnet,**
**dass** die Teiltiefenstege (18aa bis 18cc) voneinander beabstandet sind, bevorzugt um mindestens 10 mm.

7. Lagersystem nach einem der vorhergehenden Ansprüche,
**dadurch gekennzeichnet,**
**dass** der Abstand der Tiefenstege (18) voneinander mit der Position der Stützvorrichtungen (22a bis 22c) eines Einweg-Ladehilfsmittels (20) korreliert ist.

8. Lagersystem nach einem der vorhergehenden Ansprüche,
**dadurch gekennzeichnet,**
**dass** die Querstege (26) und die Tiefenstege (18) eines Facheinsatzes (16) lösbar, insbesondere mittels Schrauben, miteinander verbunden sind.

9. Lagersystem nach einem der vorhergehenden Ansprüche,
**dadurch gekennzeichnet,**
**dass** die Befestigungsvorrichtung (30) zum Befestigen des Facheinsatzes (16) an den Längstraversen (28) mindestens ein Befestigungsband und/oder Schrauben umfasst.

10. Lagersystem nach einem der vorhergehenden Ansprüche,
**dadurch gekennzeichnet,**
**dass** die Querstege (26) und/oder die Tiefenstege (18) aus Metall, aus Holz oder aus Composite Material gefertigt sind.

11. Lagersystem nach einem der vorhergehenden Ansprüche,
**dadurch gekennzeichnet,**
**dass** mindestens ein Facheinsatz (16) durch Klemmen an den Längstraversen (28) befestigt ist.

12. Lagersystem nach einem der vorhergehenden Ansprüche,
**dadurch gekennzeichnet,**
**dass** die Tiefenstege (18) zumindest an einem Ende (36) abgeschrägt sind.

13. Lagersystem nach einem der vorhergehenden Ansprüche,
**dadurch gekennzeichnet,**
**dass** der Abstand der Querstege (26) derart bemessen ist, dass zumindest zwei Querstege (26) eines Facheinsatzes (16) nicht weiter als 5 mm von den zugeordneten Längstraversen (28) beabstandet sind, diese insbesondere berühren.

14. Lagersystem nach einem der vorhergehenden Ansprüche,
**dadurch gekennzeichnet,**
**dass** der Facheinsatz (16) mindestens einen ersten (26a), einen zweiten (26b) und einen dritten Quersteg (26c) umfasst, denen mindestens eine erste (28a), eine zweite (28b) und eine dritte Längstraverse (28c) des Lagersystems zugeordnet sind, wobei der zweite Quersteg (26b) im Wesentlichen mittig zwischen dem ersten (26a) und dem dritten Quersteg (26c) angeordnet ist.

15. Facheinsatz (16) für ein Lagersystem nach einem der Ansprüche 1 bis 14.
